# EUROPÄISCHE PATENTSCHRIFT

(11) **EP 1 970 562 B1**
(45) Veröffentlichungstag und Bekanntmachung des Hinweises auf die Patenterteilung: **19.09.2012**
(21) Anmeldenummer: 07021864.9
(22) Anmeldetag: 10.11.2007
(51) Int. Cl.: F03D 7/00, F03D 7/02, F03D 7/04, F03D 9/00, H02P 9/10

(54) **Verfahren zum Betreiben einer Windenergieanlage bei plötzlichen Spannungsänderungen im Netz**
Method for operating a wind turbine with sudden voltage fluctuations in the grid
Procédé de fonctionnement d'une éolienne en cas de modification brusque de la tension dans le réseau

(30) Priorität: 20.12.2006 DE 102006060323
(43) Veröffentlichungstag der Anmeldung: 17.09.2008
(73) Patentinhaber: Nordex Energy GmbH, 22848 Norderstedt (DE)
(72) Erfinder: Thulke, Matthias, 12587 Berlin (DE); Schmidt, Gunnar, 27404 Elsdorf (DE); Frese, Thomas, 22844 Norderstedt (DE); Voss, Eberhard, Dr., 18233 Jörnstorf (DE)
(74) Vertreter: Hauck Patent- und Rechtsanwälte

(56) Entgegenhaltungen:
- EP-A2- 1 643 122
- DE-A1- 10 344 392
- US-A1- 2006 232 250

## Beschreibung

Die Erfindung bezieht sich auf ein Verfahren zum Betreiben einer Windenergieanlage mit einem Rotor, der ein Antriebsmoment über einen Triebstrang auf einen Generator überträgt, wobei der Generator ein dem Antriebsmoment entgegengesetzt wirkendes, vorgebbares Generatormoment zur Verfügung stellt und mit einem Netz verbindbar ist.

Derartige Windenergieanlagen sind in der Regel an ein Versorgungsnetz eines Energieversorgungsunternehmens angeschlossen und speisen elektrische Energie in das Versorgungsnetz ein. Dabei stellen die Windenergieanlagen Wirkleistung und Blindleistung zur Verfügung und können unter Umständen einen Beitrag zur Stabilisierung des Versorgungsnetzes leisten.

Die von den Energieversorgungsunternehmen an die Windenergieanlagen gestellten Anforderungen sind in detaillierten Netzanschlußregeln vorgeschrieben. Dabei haben sich die Anforderungen an das Verhalten von Windenergieanlagen bei Spannungseinbrüchen im Netz in den letzten Jahren stark geändert. Während die Windenergieanlagen früher bei einem Spannungseinbruch so schnell wie möglich vom Netz getrennt werden mußten, schreiben aktuelle Netzanschlußregeln vor, daß die Windenergieanlagen bei bestimmten Spannungseinbrüchen am Netz bleiben müssen, um das Netz durch Lieferung von Blindleistung zu stützen. Beispielsweise können die Netzanschlußregeln vorschreiben, daß die Windenergieanlage bei einem Spannungseinbruch, bei dem die im Netz verbleibende Spannung größer als 15% der Nennspannung ist und der eine bestimmte Zeitdauer nicht überschreitet, nicht vom Netz getrennt werden darf.

Allerdings müssen spezielle Schutzvorkehrungen getroffen werden, um eine Beschädigung oder Zerstörung der elektrischen Komponenten der Windenergieanlage zu vermeiden, wenn diese während plötzlicher Änderungen der Netzspannung mit dem Netz verbunden bleiben.

Ein Generatorsystem mit einer entsprechenden Schutzvorrichtung und ein Verfahren zum Betrieb des Generatorsystems sind aus WO 2004/030199 bekannt. Das bekannte Generatorsystem weist einen doppelt gespeisten Drei-Phasen-Generator mit netzgekoppelter Statorwicklung und wenigstens einer Rotorwicklung auf. Nach Detektion einer plötzlichen Änderung der Netzspannung wird der Stromfluß im Statorkreis bei dem bekannten Verfahren durch Aktivierung einer Schnell-Abschalteinheit unterbrochen. Anschließend wird der Generator wieder mit der aktuellen Netzspannung synchronisiert und der Stromfluß zwischen Netz und Stator wird wieder zugelassen. Durch diese Maßnahmen wird eine elektrische Überlastung der Komponenten des Generatorsystems vermieden.

Beim Einsatz eines derartigen Generatorsystems in einer Windenergieanlage sind jedoch auch die während einer Spannungsänderung auftretenden mechanischen Belastungen zu berücksichtigen. So kommt es in Folge plötzlicher Spannungsänderungen vor allem zu sprunghaften Änderungen des Generatormoments, was in Verbindung mit den großen Trägheiten der beweglichen Teile einer Windenergieanlage zu einer hohen mechanischen Beanspruchung beispielsweise der Elemente des Triebstrangs führt.

Aus der Druckschrift DE 103 44 392 A1 ist eine Windenergieanlage mit einem Blindleistungssteuermodul zur Netzstützung bekannt geworden. Das Blindleistungssteuermodul soll die Windenergieanlage so steuern, dass sie im Fall eines Spannungsrückgangs einen möglichst großen Beitrag zur Stabilisierung des Netzes leistet. Dabei wird eine Sicherheitsmindestwirkleistung ermittelt, die eine untere Grenze für die einzuspeisende Wirkleistung darstellt. Überschüssige Leistung kann in Form von Blindleistung in das Netz eingespeist werden. Die bekannte Windenergieanlage weist außerdem ein Stoßschwingungsdämpfungsmodul auf, das in elektrische oder mechanische Parameter der Windenergieanlage so eingreifen soll, dass durch eine Stoßbelastung angeregte Eigenfrequenzen des Antriebsstrangs und der Blätter des Rotors gedämpft werden.

Davon ausgehend ist es die Aufgabe der Erfindung, ein Verfahren zum Betreiben einer Windenergieanlage zur Verfügung zu stellen, das die mechanische Beanspruchung der Komponenten einer Windenergieanlage in Folge plötzlicher Änderungen der Netzspannung reduziert.

Diese Aufgabe wird gelöst durch das Verfahren mit den Merkmalen des Patentanspruchs 1.

Das erfindungsgemäße Verfahren dient zum Betreiben einer Windenergieanlage mit einem Rotor, der ein Antriebsmoment über einen Triebstrang auf einen Generator überträgt, wobei der Generator ein dem Antriebsmoment entgegengesetzt wirkendes, vorgebbares Generatormoment zur Verfügung stellt und mit einem Netz verbindbar ist, wobei nach einer plötzlichen Spannungsänderung im Netz das Generatormoment in Abhängigkeit von der Phasenlage einer Torsionsschwingung des Triebstrangs gesteuert wird.

Das Verfahren beruht auf der Erkenntnis, daß eine plötzliche Spannungsänderung im Netz durch eine mit der Spannungsänderung verbundene plötzliche Änderung des Generatormoments zu einer mechanischen Schwingung insbesondere des Triebstrangs einer Windenergieanlage führen kann. Der Triebstrang kann dabei die Rotorwelle und die Generatorwelle sowie ein zwischengeschaltetes Getriebe umfassen. Im Fall einer getriebelosen Windenergieanlage besteht der Triebstrang hingegen im wesentlichen aus einer durchgängigen Welle, die den Generator mit dem Rotor verbindet.

Das Antriebsmoment ist das von dem Rotor auf die Rotorwelle ausgeübte Drehmoment, das aus dem Wind bezogen wird. Das vorgebbare Generatormoment wirkt diesem Antriebsmoment entgegengesetzt, was einem Antrieb des Generators durch den Rotor entspricht. Bei dieser Definition der Momente sind im Regelbetrieb sowohl das Antriebsmoment als auch das Generatormoment positiv. Die plötzliche Spannungsänderung im Netz kann beispielsweise ein Spannungseinbruch in Folge eines Netzfehlers oder aufgrund einer sonstigen Ursache sein, bei der die Netzspannung um einen wesentlichen Betrag abfällt. Der Spannungsabfall kann beispielsweise 30% der Nennspannung oder mehr betragen. Es kann sich jedoch auch um einen plötzlichen Anstieg der Spannung im Netz handeln, insbesondere nach der Beseitigung eines Fehlers, der zuvor einen Spannungseinbruch verursacht haben kann.

Beobachtungen und Berechnungen haben gezeigt, daß die durch eine plötzliche Änderung des Generatormoments ausgelösten Torsionsschwingungen des Triebstrangmoments eine erhebliche Amplitude aufweisen können, die eine ähnliche Größenordnung wie das im regulären Betrieb übertragene Nennmoment erreichen kann. Dadurch können Antriebs- und Generatormoment hohe Spitzenwerte und auch negative Werte annehmen. Eine Berücksichtigung der Phasenlage dieser Torsionsschwingung kann die insgesamt auftretende Momentenbelastung des Triebstrangs und der damit verbundenen Komponenten der Windenergieanlage deutlich reduzieren.

Bei der Erfindung nimmt das Generatormoment nach Auftreten der plötzlichen Spannungsänderung einen Minimalwert an und wird zu einem von der Phasenlage der Torsionsschwingung des Triebstrangs abhängigen Zeitpunkt ausgehend von dem Minimalwert erhöht Bei der Erfindung wurde erkannt, daß die mechanische Belastung insbesondere durch den Zeitpunkt der Erhöhung des Generatormoments beeinflußt wird. Die Belastung kann gezielt verringert werden, wenn der Zeitpunkt nach Maßgabe der Phasenlage der Torsionsschwingung des Triebstrangs gewählt wird.

In einer bevorzugten Ausgestaltung der Erfindung fällt der Zeitpunkt in ein Zeitintervall, in dem das Antriebsmoment positiv ist und ansteigt. Der Anstieg ist positiv, d. h. das Antriebsmoment weist einen positiven Gradienten auf. Die Erhöhung des Generatormoments findet daher zeitgleich mit dem sich erhöhenden Antriebsmoment statt. Dadurch wird erreicht, daß die Erhöhung des Generatormoments der Schwingung des Tricbstrangs entgegenwirkt. Die Schwingung wird daher durch die gezielte Steuerung des Generatormoments gedämpft. Das Antriebsmoment ist dabei das im Bereich des Rotors auf die Rotorwelle wirkende Drehmoment, welches durch die Rückwirkung der Torsionsschwingung des Triebstrangs ebenfalls eine Schwingung ausführt.

Gemäß einer weiteren bevorzugten Ausgestaltung der Erfindung fällt der Zeitpunkt annähernd mit einem Wendepunkt des Zeitverlaufs des Antriebsmoments zusammen. Das der Torsionsschwingung entgegenwirkende Generatormoment wird in diesem Fall zu demjenigen Zeitpunkt wirksam, in dem die Beschleunigung der Torsionsbewegung ihre Richtung umkehrt. Es kommt daher zu einer besonders wirksamen Dämpfung der Torsionsschwingung.

Bevorzugt ist der Aufbau des Generatormoments zum Zeitpunkt des auf den Wendepunkt folgenden Maximums des Antriebsmoments bereits im wesentlichen abgeschlossen. Die mögliche Geschwindigkeit des Momentenaufbaus ist jedoch begrenzt, so daß der Momentenaufbau unter Umständen nicht innerhalb des günstigen Zeitintervalls zwischen Wendepunkt und darauffolgendem Maximum vollständig ausgeführt werden kann. Darum wird das Generatormoment in einer bevorzugten Ausgestaltung der Erfindung in mehreren auf die plötzliche Spanmungsänderung folgenden Zeitintervallen mit positivem und steigendem Antriebsmoment erhöht und in Zeitintervallen mit sinkendem oder negativem Antriebsmoment annähernd konstant gehalten. In Zeitintervallen mit sinkendem oder negativem Antriebsmoment wird die Erhöhung des Generatormoments also im wesentlichen ausgesetzt, um eine Anregung der Torsionsschwingung des Triebstrangs zu vermeiden. Eine Veränderung des Generatormoments erfolgt nur in denjenigen Zeitintervallen, in denen die Erhöhung des Generatormoments der Torsionsschwingung entgegenwirkt. Die mechanische Belastung des Systems kann dadurch minimiert werden und die Torsionsschwingung wird schnellstmöglich abgebaut. Wahlweise kann der Aufbau des Generatormoments auch während der gesamten "positiven Halbwelle" der Torsionsschwingung, d.h. bis zum Wendepunkt in der abfallenden Flanke des Antriebsmoments, durchgeführt werden. Bei begrenzter, maximal möglicher Geschwindigkeit des Momentenaufbaus kann das Moment dadurch innerhalb einer kleineren Anzahl von Schwingungsperioden und somit in kürzerer Zeit aufgebaut werden.

Gemäß einer bevorzugten Ausgestaltung der Erfindung wird das Generatormoment solange erhöht, bis ein vorgegebener Sollwert erreicht ist. Bevorzugt wird das Verfahren solange ausgeführt, bis sich die Windenergieanlage wieder im regulären Betrieb befindet.

Grundsätzlich kann die Erhöhung des Generatormoments mit einem beliebigen, beispielsweise linearen oder exponentiellen Verlauf erfolgen. In einer bevorzugten Ausgestaltung der Erfindung erfolgt die Erhöhung des Generatormoments mit einer Dämpfung, deren Zeitkonstante abhängig von der Frequenz der Schwingung des Triebstrangs ist. Dadurch wird erreicht, daß die Geschwindigkeit der Erhöhung des Generatormoments an die Geschwindigkeit der Triebstrangschwingung angepaßt wird. Die Schwingung des Triebstrangs wird dadurch besonders wirksam gedämpft und eine Anregung weiterer Schwingungsmoden wird verhindert.

Gemäß einer weiteren Ausgestaltung der Erfindung ist die Zeitkonstante so bemessen, daß die Erhöhung des Generatormoments innerhalb einer Viertelperiode einer Torsionsschwingung des Triebstrangs im wesentlichen abgeschlossen ist. Beispielsweise kann in dieser Zeitspanne eine Erhöhung des Generatormoments auf 3/4 des Sollwerts ausgeführt werden. Ein wesentlicher Anteil des Generatormoments wird damit bereits in der ersten Periode der Torsionsschwingung erreicht, so daß die Windenergieanlage sehr schnell wieder mit hohem Generatormoment arbeitet, ohne daß die Torsionsschwingung eine zusätzliche Anregung erfährt.

Gemäß einer weiteren bevorzugten Ausgestaltung der Erfindung wird die Phasenlage der Torsionsschwingung des Triebstrangs durch kontinuierliche, direkte Messung des Antriebsmoments bestimmt. Die Messung kann beispielsweise mit Hilfe eines Dehnungsmeßstreifens an der Rotorwelle erfolgen.

In einer weiteren bevorzugten Ausgestaltung der Erfindung wird die Phasenlage der Torsionsschwingung des Triebstrangs durch kontinuierliche Messung der Rotationsgeschwindigkeit des Triebstrangs oder eines Triebstrangelements bestimmt. Die Steuerung des Generatormoments kann somit ausgehend von den Meßwerten der Rotationsgeschwindigkeit vorgenommen werden.

In einer weiteren bevorzugten Ausgestaltung der Erfindung wird die Phasenlage der Torsionsschwingung des Triebstrangs durch kontinuierliche Messung einer Beschleunigung des Rotors oder eines Triebstrangelements bestimmt.

Gemäß einer weiteren bevorzugten Ausgestaltung der Erfindung erfolgt die Bestimmung der Phasenlage der Torsionsschwingung des Triebsstrangs durch Auswertung kontinuierlich am Generator gemessener Strom- und/oder Spannungswerte. Beispielsweise kann aus den Strom- und/oder Spannungswerten am Generator das Generatormoment bestimmt werden. Das Generatormoment wird von der Torsionsschwingung des Triebsstrangs beeinflußt. Unter Zugrundelegung eines geeigneten mathematischen Modells kann daraus der Verlauf und die Phasenlage des Antriebsmoments berechnet werden.

Gemäß einer weiteren bevorzugten Ausgestaltung der Erfindung wird die Phasenlage der Torsionsschwingung des Triebstrangs durch Extrapolation einer kontinuierlich gemessenen Größe bestimmt. Der optimale Zeitpunkt für die Steuerung des Generatormoments wird somit auf Grundlage der gemessenen Daten, die stets eine gewisse Verzögerung durch den Meßprozeß und die Datenauswertung beinhalten, antizipiert. Die Präzision der Steuerung des Generatormoments kann dadurch erhöht werden.

Gemäß einer weiteren bevorzugten Ausgestaltung der Erfindung wird eine Eigenfrequenz der Torsionsschwingung des Triebstrangs gemessen oder berechnet und die Phasenlage der Torsionsschwingung wird ausgehend von der Eigenfrequenz und dem Zeitpunkt einer plötzlichen Spannungsänderung bestimmt. In diesem Fall kann eine aufwendige Messung der Phasenlage der Torsionsschwingung entfallen und die Erhöhung des Generatormoments statt dessen auf Grundlage der bekannten mechanischen Eigenschaften des Triebstrangs der Windenergieanlage vorgegeben werden.

In einer weiteren bevorzugten Ausgestaltung der Erfindung nimmt das Generatormoment nach Auftreten einer plötzlichen Spannungsänderung für ein Zeitintervall annähernd den Wert Null an. Dadurch wird ein besonders sanftes Anfahren des Generatormoments ermöglicht.

Nachfolgend wird die Erfindung anhand von zwei in vier Figuren dargestellten Ausführungsbeispielen näher erläutert.

Es zeigen:
- Figur 1: Verlauf des Antriebsmoments und des Generatormoments bei einem ersten Ausführungsbeispiel des erfindungsgemäßen Verfahrens;
- Figur 2: Flußdiagramm der Steuerung des Generatormoments für das Verfahren aus Figur 1;
- Figur 3: Flußdiagramm einer Regelung des Generatormoments in einem zweiten Ausführungsbeispiel des erfindungsgemäßen Verfahrens;
- Figur 4: Zeitverlauf des Antriebsmoments und des Generatormoments beim zweiten Ausführungsbeispiel mit der Regelung nach Figur 3.

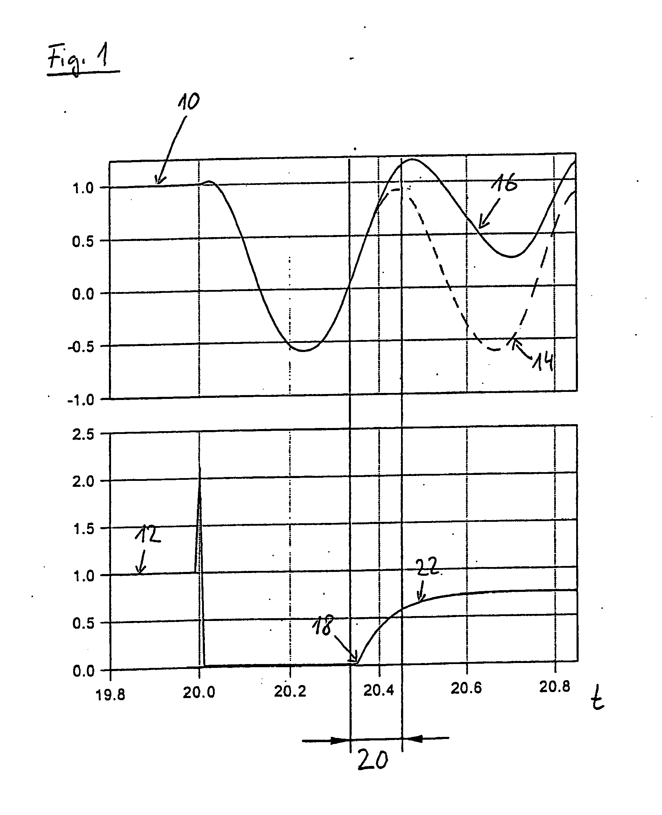

In der Figur 1 ist im oberen Diagramm der Verlauf des Antriebsmoments, d.h. des aus dem Wind und auf eine Rotorwelle wirkenden Drehmoments einer Windenergieanlage dargestellt. Im unteren Diagramm ist der Verlauf des Generatormoments dargestellt.

Die gemeinsame Zeitachse beider Diagramme aus Fig. 1 deckt ein Zeitintervall von ungefähr einer Sekunde ab. Die dargestellten Verläufe der Momente sind einer Simulationsrechnung entnommen.

Zu Beginn des dargestellten Zeitabschnitts befindet sich die Windenergieanlage im regulären Betrieb. Antriebsmoment 10 und Generatormoment 12 sind zu diesem Zeitpunkt auf den Wert 1 normiert. Zu der mit t = 20 Sekunden bezeichneten Zeit kommt es zu einem plötzlichen Spannungseinbruch im Netz. In Folge des Spannungseinbruchs erhöht sich das Generatormoment zunächst schlagartig, um anschließend innerhalb einer sehr kurzen Zeit auf Null abzusinken.

In Folge der plötzlichen Schwankung des Generatormoments 12 wird eine mechanische Torsionsschwingung des Triebstrangs angeregt, die auf das Antriebsmoment 10 zurückwirkt. Das Antriebsmoment nimmt daher stark schwankende Werte an, die einen Bereich von weniger als -0,5 bis deutlich über 1 annehmen. Wie im Diagramm ersichtlich, beträgt die Frequenz der sich ausbildenden Torsionsschwingung etwa 2 bis 3 Hz.

Die gestrichelt dargestellte Kurve 14 gibt den Verlauf des Antriebsmoments für den Fall wieder, daß das Generatormoment nicht wieder aufgebaut wird, sondern bei dem Wert Null verbleibt. Die Kurve 14 ist daher ein Abbild der mechanischen Schwingungseigenschaften des Triebstrangs. Es zeigt sich, daß die Amplitude der Torsionsschwingung innerhalb des dargestellten Zeitintervalls nahezu konstant bleibt, was auf eine geringe innere Dämpfung des mechanischen Systems schlie-ßen läßt.

Der mit 16 bezeichnete Verlauf des Antriebsmoments stellt den Verlauf der Torsionsschwingung nach einer erfindungsgemäßen Erhöhung des Generatormoments zum Zeitpunkt 18 dar. Bei dem Verfahren wird die Phasenlage des Antriebsmoments kontinuierlich gemessen. Zu dem mit 18 bezeichneten Zeitpunkt ist das Antriebsmoment 10 positiv und steigend. Zusätzlich durchläuft es gerade einen Wendepunkt, d.h. die Winkelgeschwindigkeit der Torsionsschwingung beginnt sich gerade von ihrem Maximalwert aus zu verringern. Zu diesem Zeitpunkt 18 wird das Generatormoment 22 kontinuierlich auf einen Sollwert erhöht, im Beispiel mit einem PT1-Verlauf. Dadurch führt das sich aufbauende Generatormoment in dem mit 20 bezeichneten Zeitintervall zu einer Dämpfung der Torsionsschwingung. Das in Folge der Dämpfung rasche Abnehmen der Amplitude des Antriebsmoments 16 ist im oberen Diagramm der Figur 1 deutlich erkennbar. Gleichzeitig wird durch den schnellen Aufbau des Generatormoments innerhalb des Zeitintervalls 20 der Sollwert des Generatormoments bereits im wesentlichen erreicht. Es wird daher frühzeitig wieder ein wesentlicher Teil der angestrebten Leistung in das Netz eingespeist.

In dem sich an das Zeitintervall 20 anschließenden Zeitbereich erhöht sich das Generatormoment 22 nur noch langsam, so daß eine zusätzliche Anregung der Torsionsschwingung weitgehend vermieden wird.

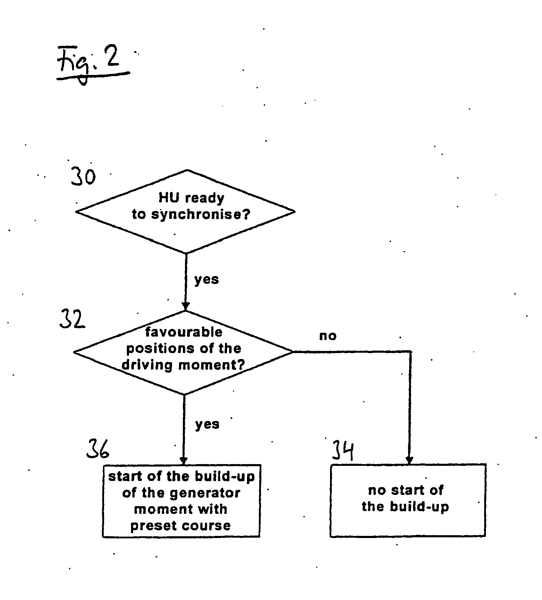

Das in Figur 2 dargestellte Flußdiagramm der Steuerung des Generatormoments beginnt in der Raute 30 (HU bereit zum Synchronisieren?) mit einer Überprüfung, ob der Hauptumrichter nach dem Spannungseinbruch wieder bereit für die Synchronisation des Generators mit dem Netz ist. Ist dies der Fall, wird in der mit 32 bezeichneten Raute (günstige Phasenlagen des Antriebsmoments?) die Phasenlage der Torsionsschwingung ausgewertet. Dazu erfolgt beispielsweise eine kontinuierliche Messung des Antriebsmoments. Günstig für den Aufbau des Generatormoments ist dabei eine Phasenlage, bei der das sich aufbauende Generatormoment die Torsionsschwingung dämpft. Wie vorstehend beschrieben, ist das in demjenigen, günstigen Zeitintervall der Fall, in dem das Antriebsmoment positiv ist und ansteigende Werte annimmt. Dies entspricht dem in der Figur 1 mit 20 bezeichneten Zeitintervall, in dem sich die Torsionsbewegung des Triebstrangs in Folge der Schwingung gerade verlangsamt. Genauer beginnt das Intervall mit dem Wendepunkt in der ansteigenden Flanke des Antriebsmoments.

Ergibt die Überprüfung in der Raute 32 keine in diesem Sinne günstige Phasenlage des Antriebsmoments, wird kein Generatormoment aufgebaut. Dies ist durch den Kasten 34 (kein Start des Aufbaus) angedeutet.

Ergibt hingegen die Überprüfung bei 32 eine günstige Phasenlage des Antriebsmoments, wird in dem Kasten 36 (Start des Aufbaus des Generatormoments mit vorgegebenem Verlauf) der Aufbau des Generatormoments gestartet. Zu diesem Zwecke erhält der Hauptumrichter ein Startsignal, woraufhin er das vorgegebene Generatormoment mit einem vorgegebenen Verlauf erhöht. Dieser Vorgang kann dem in der Figur 1 zum Zeitpunkt 18 ausgelösten Verlauf des Generatormoments 22 folgen.

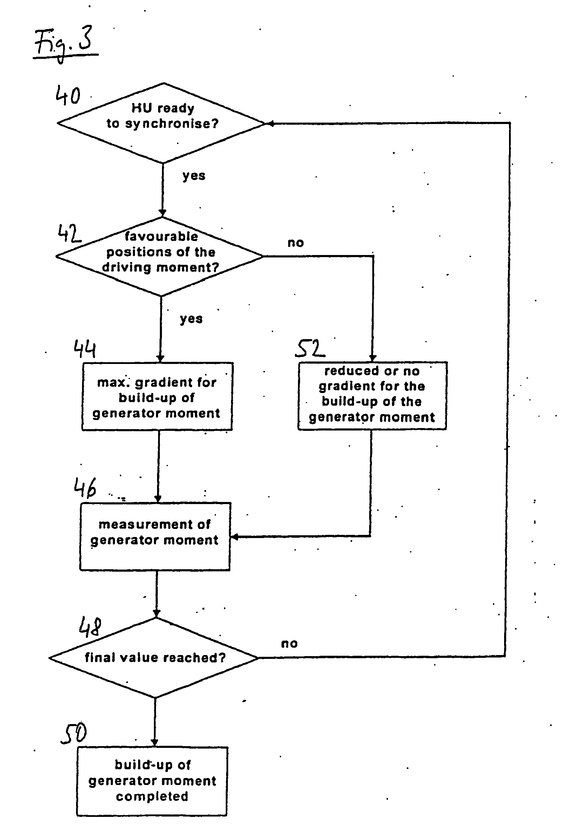

Eine alternative Ausgestaltung der Erfindung sieht eine Regelung des Aufbaus des Generatormoments vor. Dieses Regelungsverfahren beginnt in dem in der Figur 3 dargestellten Flußdiagramm ebenfalls mit einer Überprüfung, ob der Hauptumrichter bereit zum Synchronisieren ist (Raute 40, HU bereit zum Synchronisieren?) und wird kontinuierlich ausgeführt, bis das Generatormoment einen Endwert erreicht hat.

Ist dies der Fall, beginnt in der Raute 42 (günstige Phasenlage des Antriebsmoments) die Auswertung der kontinuierlichen Messung des Antriebsmoments. Ergibt diese Auswertung eine günstige Phasenlage des Antriebsmoments (siehe Erläuterungen zu Figur 2), wird in dem Kasten 44 (max. Gradient für Aufbau Generatormoment) die Erhöhung des Generatormoments mit einer vorgegebenen maximalen Geschwindigkeit, d.h. mit einem vorgegebenen maximalen Gradienten, vorgenommen. Dabei wird in dem Kasten 46 (Messung Generatormoment) das Generatormoment gemessen. Diese Messung wird in der Raute 48 ausgewertet (Endwert erreicht?). Hat das Generatormoment einen vorgegebenen Endwert erreicht, ist der Aufbau des Generatormoments abgeschlossen (Kasten 50, Aufbau Generatormoment abgeschlossen).

Ergibt hingegen die Überprüfung bei 48, daß der vorgegebene Endwert des Generatormoments noch nicht erreicht worden ist, wird das Flußdiagramm beginnend bei der Raute 40 erneut durchlaufen. Ergibt dabei die bei 42 ausgeführte Auswertung der Phasenlage des Antriebsmoments eine ungünstige Phasenlage, d.h. eine Phasenlage, bei der eine weitere Erhöhung des Generatormoments die Torsionsschwingung des Triebstrangs zusätzlich anregen würde, wird in dem Kasten 52 (reduzierter bzw. kein Gradient für Aufbau Generatormoment) der weitere Aufbau des Generatormoments ausgesetzt bzw. nur mit reduzierter Geschwindigkeit fortgesetzt. Dadurch wird das Generatormoment bei ungünstiger Phasenlage der Torsionsschwingung des Triebstrangs im wesentlichen konstant gehalten. Anschließend erfolgt in dem Kasten 46 wiederum eine Messung des Generatormoments und bei 48 eine Überprüfung, ob der vorgegebene Endwert erreicht worden ist. Gegebenenfalls wird die Schleife erneut durchlaufen.

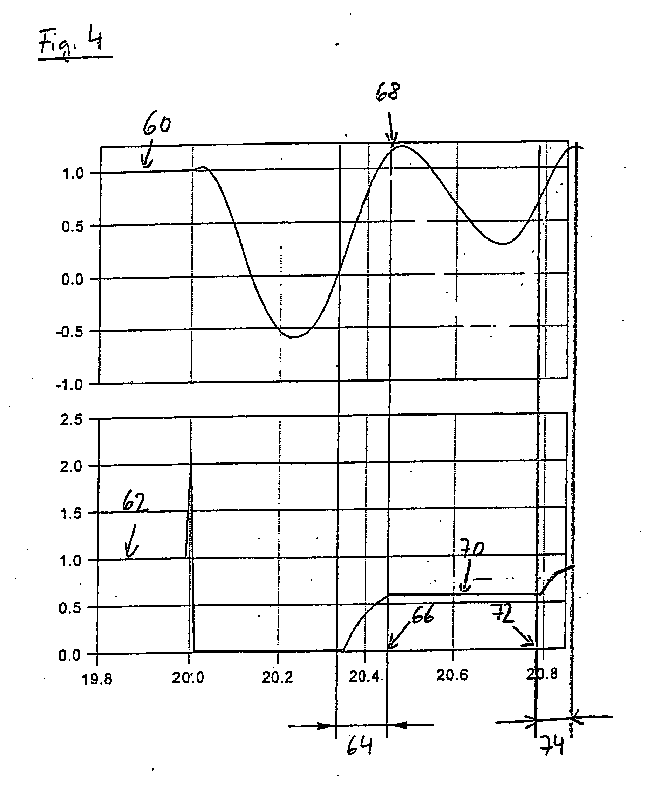

Bei Ausführung des in dem Flußdiagramm aus Figur 3 dargestellten Regelungsverfahrens des Generatormoments ergibt sich der in der Figur 4 dargestellte Verlauf des Antriebsmoments 60 und des Generatormoments 62.

Bis zum Ende des Zeitintervalls 64 unterscheidet sich der Verlauf der Momente nicht von dem in Figur 1 dargestellten Ausführungsbeispiel. Im Gegensatz zum ersten Ausführungsbeispiel wird jedoch zum Zeitpunkt 66 mit dem Ende der ansteigenden Flanke des Antriebsmoments bei 68 der Aufbau des Generatormoments in dem mit 70 bezeichneten Bereich ausgesetzt. Zum Zeitpunkt 66 wurde bei der Überprüfung der Phasenlage des Antriebsmoments eine ungünstige Phasenlage festgestellt. Um eine zusätzliche Anregung der Torsionsschwingung zu vermeiden, wird das Generatormoment nicht weiter erhöht.

Zu dem mit 72 bezeichneten Zeitpunkt wird wieder eine günstige Phasenlage detektiert und die Erhöhung des Generatormoments beginnt erneut in dem mit 74 bezeichneten Zeitintervall.

Auf diese Weise wird der Aufbau des Generatormoments auf diejenigen Zeitintervalle beschränkt, in denen die Torsionsschwingung durch die Erhöhung des Generatormoments gedämpft wird. Alternativ kann auch zwischen diesen Zeitintervallen eine Erhöhung des Generatormoments ausgeführt werden. Diese erfolgt jedoch mit wesentlich reduzierter Geschwindigkeit.

Statt des in den Figuren 1 und 4 dargestellten PT1-Verlaufs kann auch eine lineare Erhöhung oder eine Verzögerung höherer Ordnung des Generatormoments ausgeführt werden.

## Patentansprüche

1. Verfahren zum Betreiben einer Windenergieanlage mit einem Rotor, der ein Antriebsmoment über einen Triebstrang auf einen Generator überträgt, wobei der Generator ein dem Antriebsmoment entgegengesetzt wirkendes, vorgebbares Generatormoment zur Verfügung stellt und mit einem Netz verbindbar ist, **dadurch gekennzeichnet, dass** nach einer plötzlichen Spannungsänderung im Netz das Generatormoment in Abhängigkeit von der Phasenlage einer Torsionsschwingung des Triebstrangs gesteuert wird, wobei das Generatormoment nach Auftreten der plötzlichen Spannungsänderung einen Minimalwert annimmt und zu einem von der Phasenlage der Torsionsschwingung des Triebstrangs abhängigen Zeitpunkt ausgehend von dem Minimalwert erhöht wird.

2. Verfahren nach Anspruch 1, **dadurch gekennzeichnet, daß** der Zeitpunkt in ein Zeitintervall fällt, in dem das Antriebsmoment positiv ist und ansteigt.

3. Verfahren nach Anspruch 2, **dadurch gekennzeichnet, daß** der Zeitpunkt annähernd mit einem Wendepunkt des Zeilverlaufs des Antriebsmoments zusammenfällt.

4. Verfahren nach einem der Ansprüche 1 bis 3, **dadurch gekennzeichnet, daß** das Generatormoment in mehreren auf die plötzliche Spannungsänderung folgenden Zeitintervallen mit positivem und steigendem Antriebsmoment erhöht wird und in Zeitintervallen mit sinkendem oder negativem Antriebsmoment annähernd konstant gehalten wird.

5. Verfahren nach einem der Ansprüche 1 bis 4, **dadurch gekennzeichnet, daß** das Generatormoment solange erhöht wird, bis ein vorgegebener Sollwert erreicht ist.

6. Verfahren nach einem der Ansprüche 1 bis 5, **dadurch gekennzeichnet, daß** die Erhöhung des Generatormoments mit einer Dämpfung erfolgt, deren Zeitkonstante abhängig von der Frequenz der Schwingung des Triebstrangs ist.

7. Verfahren nach Anspruch 6, **dadurch gekennzeichnet, daß** die Zeitkonstante so bemessen ist, daß die Erhöhung des Generatormoments innerhalb einer Viertelperiode einer Torsionsschwingung des Triebstrangs im wesentlichen abgeschlossen ist.

8. Verfahren nach einem der Ansprüche 1 bis 7, **dadurch gekennzeichnet, daß** die Phasenlage der Torsionsschwingung des Triebstrangs durch kontinuierliche, direkte Messung des Antriebsmoments bestimmt wird.

9. Verfahren nach einem der Ansprüche 1 bis 7, **dadurch gekennzeichnet, daß** die Phasenlage der Torsionsschwingung des Triebstrangs durch kontinuierliche Messung der Rotationsgeschwindigkeit des Triebstrangs oder eines Triebstrangelements bestimmt wird.

10. Verfahren nach einem der Ansprüche 1 bis 7, **dadurch gekennzeichnet, daß** die Phasenlage der Torsionsschwingung des Triebstrangs durch kontinuierliche Messung einer Beschleunigung des Rotors oder eines Triebstrangelements bestimmt wird.

11. Verfahren nach einem der Ansprüche 1 bis 7, **dadurch gekennzeichnet, daß** die Bestimmung der Phasenlage der Torsionsschwingung des Triebstrangs durch Auswertung kontinuierlich am Generator gemessener Strom- und/oder Spannungswerte erfolgt.

12. Verfahren nach einem der Ansprüche 8 bis 11, **dadurch gekennzeichnet, daß** die Phasenlage der Torsionsschwingung des Triebstrangs durch Extrapolation einer kontinuierlich gemessenen Größe bestimmt wird.

13. Verfahren nach einem der Ansprüche 1 bis 12, **dadurch gekennzeichnet, daß** eine Eigenfrequenz der Torsionsschwingung des Triebstrangs gemessen oder berechnet wird und die Phasenlage der Torsionsschwingung ausgehend von der Eigenfrequenz und dem Zeitpunkt einer plötzlichen Spannungsäuderung bestimmt wird.

14. Verfahren nach einem der Ansprüche 1 bis 13, **dadurch gekennzeichnet, daß** das Generatormoment nach Auftreten einer plötzlichen Spannungsänderung für ein Zeitintervall annähernd den Wert Null annimmt.

## Claims

1. A method for operating a wind energy plant with a rotor, which transfers a driving torque to a generator via a drive train, wherein the generator provides a pre-settable generator torque acting opposite to the driving torque and is connectable to a grid, **characterised in that** after a sudden voltage change in the grid, the generator torque is controlled depending on the phase of a torsional vibration of the drive train, wherein the generator torque takes on a minimum value after the occurrence of the sudden voltage change, and is increased starting from the minimum value at a point in time which depends on the phase of the torsional vibration of the drive train.

2. A method according to claim 1, **characterised in that** the point in time is within a time interval in which the driving torque is positive and increasing.

3. A method according to claim 2, **characterised in that** the point in time approximately coincides with an inflection point of the time function of the driving torque.

4. A method according to any one of claims 1 to 3, **characterised in that** the generator torque is increased in plural time intervals with positive and increasing driving torque which follow the sudden voltage change, and is kept approximately constant in time intervals with decreasing or negative driving torque.

5. A method according to any one of claims 1 to 4, **characterised in that** the generator torque is increased until a predetermined desired value is reached.

6. A method according to any one of claims 1 to 5, **characterised in that** the increase of the generator torque is done with a damping, the time constant of which depends on the frequency of the vibration of the drive train.

7. A method according to claim 6, **characterised in that** the time constant is selected such that the increase of the generator torque is substantially completed within a quarter period of one torsional oscillation of the drive train.

8. A method according to any one of claims 1 to 7, **characterised in that** the phase of the torsional vibration of the drive train is detected through continuous, direct measurement of the driving torque.

9. A method according to any one of claims 1 to 7, **characterised in that** the phase of the torsional vibration of the drive train is detected through continuous measurement of the rotational speed of the drive train or of a drive train element.

10. A method according to any one of claims 1 to 7, **characterised in that** the phase of the torsional vibration of the drive train is detected through continuous measurement of an acceleration of the rotor or of a drive train element.

11. A method according to any one of claims 1 to 7, **characterised in that** the detection of the phase of the torsional vibration of the drive train takes place through the analysis of current and/or voltage values which are continuously measured at the generator.

12. A method according to any one of claims 8 to 11, **characterised in that** the phase of the torsional vibration of the drive train is determined through extrapolation of a continuously measured quantity.

13. A method according to any one of claims 1 to 12, **characterised in that** an eigenfrequency of the torsional vibration of the drive train is measured or calculated and the phase of the torsional vibration is determined on the basis of the eigenfrequency and the point in time of a sudden voltage change.

14. A method according to any one of claims 1 to 13, **characterised in that** the generator torque takes on a value of approximately zero during a time interval after the occurrence of a sudden voltage change.

## Revendications

1. Procédé de fonctionnement d'une éolienne avec un rotor qui transmet à un générateur un moment d'entraînement par le biais d'une transmission, le générateur produisant un moment de générateur paramétrable agissant de façon opposée au moment d'entraînement et pouvant être raccordé à un réseau, **caractérisé en ce que**, après une modification brusque de la tension dans le réseau, le moment de générateur est commandé en fonction de la phase d'une oscillation de torsion de la transmission, le moment de générateur adoptant, après la modification brusque de la tension, une valeur minimale et étant augmenté, à partir de la valeur minimale, à un instant qui dépend de la phase de l'oscillation de torsion de la transmission.

2. Procédé selon la revendication 1, **caractérisé en ce que** l'instant tombe dans un intervalle de temps dans lequel le moment d'entraînement est positif et augmente.

3. Procédé selon la revendication 2, **caractérisé en ce que** l'instant coïncide approximativement avec un point d'inflexion de la courbe temporelle du moment d'entraînement.

4. Procédé selon une des revendications 1 à 3, **caractérisé en ce que** le moment de générateur est augmenté dans plusieurs intervalles de temps qui suivent la modification brusque de la tension avec un moment d'entraînement positif et croissant, et est maintenu approximativement constant dans des intervalles de temps avec un moment d'entraînement décroissant ou négatif.

5. Procédé selon une des revendications 1 à 4, **caractérisé en ce que** le moment de générateur est augmenté jusqu'à ce qu'une valeur de consigne prédéfinie soit atteinte.

6. Procédé selon une des revendications 1 à 5, **caractérisé en ce que** l'augmentation du moment de générateur s'effectue avec un amortissement dont la constante de temps dépend de la fréquence de l'oscillation de la transmission.

7. Procédé selon la revendication 6, **caractérisé en ce que** la constante de temps est choisi de telle sorte que l'augmentation du moment de générateur est essentiellement terminée à l'intérieur d'un quart de période d'une oscillation de torsion de la transmission.

8. Procédé selon une des revendications 1 à 7, **caractérisé en ce que** la phase de l'oscillation de torsion de la transmission est déterminée par la mesure continue directe du moment d'entraînement.

9. Procédé selon une des revendications 1 à 7, **caractérisé en ce que** la phase de l'oscillation de torsion de la transmission est déterminée par la mesure continue de la vitesse de rotation de la transmission ou d'un élément de la transmission.

10. Procédé selon une des revendications 1 à 7, **caractérisé en ce que** la phase de l'oscillation de torsion de la transmission est déterminée par la mesure continue d'une accélération du rotor ou d'un élément de la transmission.

11. Procédé selon une des revendications 1 à 7, **caractérisé en ce que** la détermination de la phase de l'oscillation de torsion de la transmission s'effectue par l'analyse des valeurs de courant et/ou de tension mesurées en continu sur le générateur.

12. Procédé selon une des revendications 8 à 11, **caractérisé en ce que** la phase de l'oscillation de torsion de la transmission est déterminée par l'extrapolation d'une grandeur mesurée en continu.

13. Procédé selon une des revendications 1 à 12, **caractérisé en ce qu'**une fréquence propre de l'oscillation de torsion de la transmission est mesurée ou calculée, et **en ce que** la phase de l'oscillation de torsion est déterminée à partir de la fréquence propre et de l'instant d'une modification brusque de la tension.

14. Procédé selon une des revendications 1 à 13, **caractérisé en ce que** le moment de générateur adopte approximativement la valeur zéro pendant un intervalle de temps après la survenue d'une modification brusque de la tension.
